# EUROPEAN PATENT SPECIFICATION

(11) **EP 2 813 045 B1**
(45) Date of publication and mention of the grant of the patent: **13.01.2021**
(21) Application number: 12704052.5
(22) Date of filing: 10.02.2012
(51) Int. Cl.: H04L 29/06

(54) **ACCESS NETWORK TRUSTWORTHINESS DETECTION IN CORE NETWORK**
ERKENNUNG DER VERTRAUENSWÜRDIGKEIT IN EINEM ZUGANGSNETZWERK
DÉTECTION DE LA FIABILITÉ D'UN RÉSEAU D'ACCÈS DANS UN RÉSEAU FÉDÉRATEUR

(43) Date of publication of application: 17.12.2014
(73) Proprietor: Nokia Solutions and Networks Oy, 02610 Espoo (FI)
(72) Inventor: HURTTA, Tuija Helena, FIN-02660 Espoo (FI)
(74) Representative: Nokia EPO representatives
(86) International application number: PCT/EP2012/052253
(87) International publication number: WO 2013/117232

(56) References cited:
- WO-A1-2010/076044
- WO-A1-2010/086029

## Description

### Field

The present invention relates to access network trustworthiness detection in core network. More specifically, the present invention exemplarily relates to measures (including methods, apparatuses and computer program products) for access network trustworthiness detection in core network.

### Background

The present specification basically relates to detection of trustworthiness of an access network in a core network. The background for the expediency of such trustworthiness detection in modern and future communication systems is the trend towards interoperability between access networks of different access technology types and vendors with the core networks of different operators.

Referring to 3GPP standardization, the EPS (Evolved Packet System) supports the use of 3GPP access networks and non-3GPP access networks to access the EPC (Evolved Packet Core), i.e. to provide (e.g. I P) connectivity of a terminal to the evolved packet core network via the 3GPP or non-3GPP access network. In addition, before the introduction of the EPS, 3GPP has also defined solutions to connect WiFi/WLAN (i.e. non-3GPP access networks) to the 2G/3G packet core network.

For example, the provision of IP connectivity to the EPC via a WiFi access network is currently attaining interest in the context of WiFi offloading. Namely, due to bandwidth and resource limitations in the radio access domain, operators of cellular systems are interested in offloading IP traffic (which is expected to drastically increase in the future) from the cellular radio access networks to WFi access, but still in such a way that IP traffic is carried via the operator's core network. This requires connecting WFi access as an example of a non-3GPP access network to the operator's (3GPP) core network.

For the connection of an access network to a core network, in order to ensure integrity and security in the core network, the core network has to have reliable knowledge of the trusted/untrusted property of the access network, i.e. its trustworthiness with respect to the core network.

Referring to 3GPP standardization, architectural enhancements for non-/3GPP access to access the EPC are specified, which depend on the presumed trustworthiness of the access network.

For example, for connecting WFi access as an example of a non-3GPP access network to a (3GPP) core network, there are basically two options. On the one hand, when the operator presumes that the WiFi access is untrusted, e.g. when the WFi access network is operated by another operator, the WiFi access may be connected with the ePDG to the PGW. On the other hand, when the operator presumes that the WiFi access is trusted, e.g. when the operator operators its own WiFi access network, the WFi access may be connected (via its access gateway) to the PGW.

The document WO 2010/076044 A1 discloses measures for trustworthiness decision making for access authentication, for example relating to the trustworthiness of non-3GPP access networks within a 3GPP-compliant packet data system, exemplarily comprising receiving an indication about a provisional trustworthiness of an access network, which provides packet data access for a roaming user, with respect to a visited network of said user from a network element of said visited network, determining the applicability of local breakout or home routing for each subscribed access point name of said user, and deciding about a final trustworthiness of said access network based upon the received provisional trustworthiness indication and the determined routing applicability for each subscribed access point name of said user.

Further background art is also known from the document WO 2010/086029 A1 relating to a method and a radio communication system for establishing an access of a user equipment to a mobile network domain via an initially unrecognized trusted access network.

However, there is currently no means or mechanism to verify the presumed trustworthiness of the access network. Stated in other words, it cannot be reliably verified whether or not the access network being connected (via its access gateway) to the PGW is actually trusted.

Therefore, there is a need to provide for access network trustworthiness detection in the core network.

### Summary

Various exemplary embodiments of the present invention aim at addressing at least part of the above issues and/or problems and drawbacks.

Various aspects of exemplary embodiments of the present invention are set out in the appended claims.

According to the present invention, there are provided a method, as defined in claims 1 to 5, an apparatus, as defined in claims 6 to 10, computer program product, as defined in claims 11 and 12.

Advantageous further developments or modifications of the present invention are set out in the following.

Any one of the above aspects enables a reliable verification as to whether or not a presumably trusted access network being connected with a core network (via a corresponding connection) is actually trusted.

By way of exemplary embodiments of the present invention, there is provided access network trustworthiness detection in core network. More specifically, by way of exemplary embodiments of the present invention, there are provided measures and mechanisms for access network trustworthiness detection in core network.

Thus, improvement is achieved by methods, apparatuses and computer program products enabling/realizing access network trustworthiness detection in core network.

### Brief description of the drawings

In the following, the present invention will be described in greater detail by way of non-limiting examples with reference to the accompanying drawings, in which
Figure 1 shows a schematic diagram of a system architecture for which exemplary embodiments of the present invention are applicable,
Figure 2 shows a schematic diagram of an exemplary procedure according to exemplary embodiments of the present invention, and
Figure 3 shows a schematic diagram of exemplary apparatuses of according to exemplary embodiments of the present invention.

### Detailed description of drawings and embodiments of the present invention

The present invention is described herein with reference to particular non-limiting examples and to what are presently considered to be conceivable embodiments of the present invention. A person skilled in the art will appreciate that the invention is by no means limited to these examples, and may be more broadly applied.

It is to be noted that the following description of the present invention and its embodiments mainly refers to specifications being used as non-limiting examples for certain exemplary network configurations and deployments. Namely, the present invention and its embodiments are mainly described in relation to 3GPP specifications being used as non-limiting examples for certain exemplary network configurations and deployments. In particular, a 3GPP communication system is used as a non-limiting example for the applicability of thus described exemplary embodiments. As such, the description of exemplary embodiments given herein specifically refers to terminology which is directly related thereto. Such terminology is only used in the context of the presented non-limiting examples, and does naturally not limit the invention in any way. Rather, any other network configuration or system deployment, etc. may also be utilized as long as compliant with the features described herein.

In particular, the present invention and its embodiments may be applicable in any (cellular) communication system and/or network deployment in which various types of access networks are connectable to a core network, particularly but not exclusively types of access networks which are not specified according to the same specifications as the core network (e.g. in the context of a non-3GPP access network providing IP connectivity to a 3GPP core network).

Hereinafter, various embodiments and implementations of the present invention and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to exemplary embodiments of the present invention, in general terms, there are provided measures and mechanisms for (enabling/realizing) access network trustworthiness detection in core network.

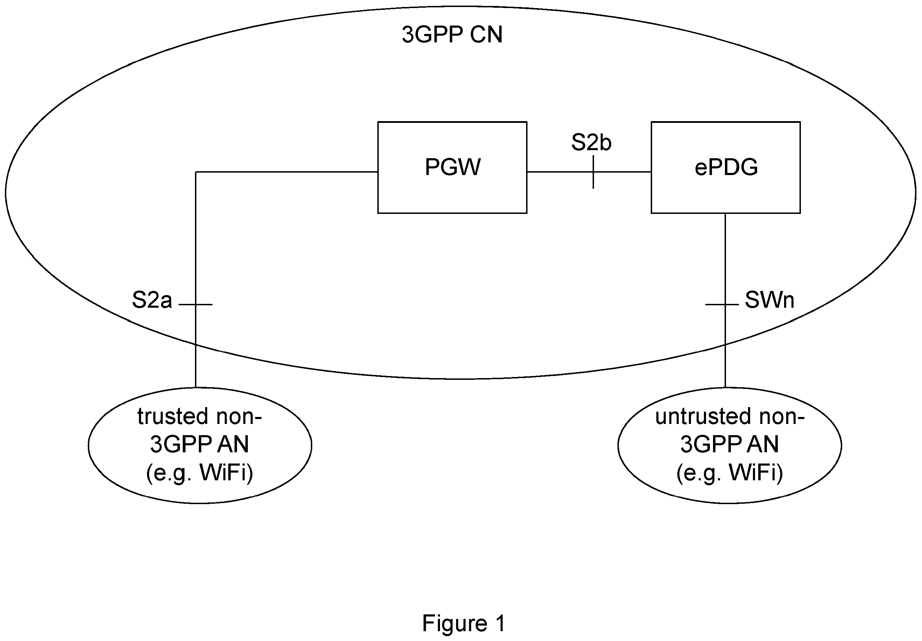

Figure 1 shows a schematic diagram of a system architecture for which exemplary embodiments of the present invention are applicable.

As shown in Figure 1, a system architecture of an evolved packet system (EPS) is exemplarily assumed, which comprises a 3GPP core network (CN), i.e. an EPC, as well as a trusted non-3GPP access network (AN) and an untrusted non-3GPP access network (AN). Both access networks may be of a WiFi access technology type, wherein WiFi may encompass WLAN (IEEE 802.11) and/or WiMAX (IEEE 802.16) access technologies.

As described above, it is exemplarily assumed that the untrusted access network is connected with the ePDG to the PGW, i.e. via the SWn and S2b interfaces or reference points, and the trusted access network is connected (via its access gateway which is not illustrated) to the PGW, i.e. via the S2a interface or reference point or via the Gn interface or reference point. It may be noted that, in a single gateway configuration, the PGW may be collocated with a S-GW.

It is to be noted that an access network is generally assumed herein to provide for connectivity or access of a terminal to a core network. For example, a WiFi access network may provide for IP connectivity or access of a terminal to a core network.

In the exemplary system architecture according to Figure 1, a trusted non-3GPP access network is illustrated to be connected to the 3GPP core network with the S2a interface. While the S2a interface is depicted to be located between the trusted non-3GPP access network and the PGW, it may actually be located between an access gateway of the trusted non-3GPP access network and the PGW, wherein the access gateway of the trusted non-3GPP access network may comprise a trusted WLAN AAA proxy function and/or a trusted WLAN AAA gateway function. Irrespective thereof, also a Gn interface may be located between the trusted non-3GPP access network and the PGW or a GGSN, which may actually be located between an access gateway of the trusted non-3GPP access network and the PGW or GGSN.

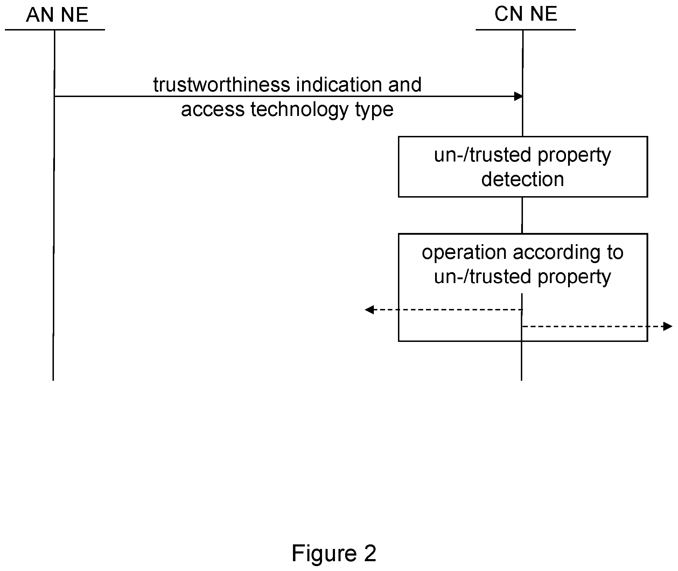

Figure 2 shows a schematic diagram of an exemplary procedure according to exemplary embodiments of the present invention.

The exemplary procedure according to Figure 2 is assumed to take place between a network element of an access network (AN NE) and a network element of a core network (CN NE). In view of the exemplary system architecture according to Figure 1, the CN NE may for example be any applicable CN NE, such as e.g. the PGW, while the AN NE may be any network element of a trusted WiFi AN, such as e.g. a base station or access point, an access controller, any gateway element such as an access gateway, or the like. Although not illustrated, the applicable CN NE may for example also be a GGSN.

As shown in Figure 2, a procedure according to exemplary embodiments of the present invention comprises the following operations/functions.

The AN NE signals a trustworthiness indication of an access network (e.g. the trusted WiFi AN of Figure 1) with respect to a core network (e.g. the 3GPP CN of Figure 1) together with an access technology type of the access network towards the core network, i.e. the CN NE. Such signaling may be accomplished by transmission of a corresponding signaling message on any applicable interface.

For example, when the CN NE corresponds to a PGW, an applicable interface may be e.g. the S2a interface or the Gn interface, when the CN NE corresponds to a GGSN, an applicable interface may be e.g. the Gn interface, and the like. Also, when the CN NE corresponds to a PGW, an applicable interface may be one via an AAA element or a PCRF element, i.e. the signaling may be effected via an access gateway and an AAA element or via an access gateway and a PCRF element.

The CN NE acquires the trustworthiness indication of the access network with respect to the core network together with the access technology type of the access network from the access network, i.e. the AN NE. Such acquiring may be accomplished by reception of a corresponding signaling message e.g. on the S2a interface or on the Gn interface or any other applicable interface. Thereupon, the CN NE detects a trusted or untrusted property of the access network of the access technology type based on the acquired trustworthiness indication and access technology type, and operates according to the detected trusted or untrusted property of the access network.

According to exemplary embodiments of the present invention, the trustworthiness indication and the access technology type may be transferred from the AN NE to the CN NE according to any available or conceivable protocol mechanism between these elements, e.g. on the S2a interface or on the Gn interface or any other applicable interface.

According to exemplary embodiments of the present invention, a PMIPv6-based signaling (according to 3GPP R8 specifications) and/or a GTPv2-based signaling (according to 3GPP R11 specifications) may be employed when the CN NE correspond to a PGW (i.e. on the S2a interface), and/or a GTPv1-based signaling (according to 3GPP R11 specifications) may be employed when the CN NE correspond to a PGW or a GGSN (i.e. on the Gn interface).

According to exemplary embodiments of the present invention, in any one of the different protocol mechanisms usable for signaling purposes, the trusted or untrusted property of the access network may be indicated by way of one or more dedicated (additional) values in an access technology type parameter or by way of a dedicated parameter in addition to an access technology type parameter. Accordingly, either two different values within the parameter dedicated for access technology type indication or two different values of another parameter together with a specific value within the parameter dedicated for access technology type indication may be transferred for providing the CN NE with sufficient information to detect the trusted or untrusted property (i.e. the trustworthiness) of the access network of a specific access technology type.

In a PMIPv6-based signaling according to exemplary embodiments of the present invention, the access technology type is transferred in the access technology type option field, particularly in the (8 bit) ATT field thereof, thus representing an access technology type parameter. Currently, the value 4 is defined for the access technology type "IEEE 802.11a/b/g, WLAN".

On the one hand, the trustworthiness indication may also be transferred in the access technology type option field representing the access technology type parameter, wherein two different values in the access technology type parameter are assigned for the trusted and untrusted properties of the respective access network. As one option, in the present example case, the value defined for the access technology type "IEEE 802.11a/b/g, WLAN" (namely, the value 4) may be used for an untrusted access network (i.e. "untrusted IEEE 802.11a/b/g, WLAN"), while a newly defined value (namely, any value between 6 and 255, e.g. 6) may be used for a trusted access network (i.e. "trusted IEEE 802.11a/b/g, WLAN"). As another option, in the present example case, a newly defined value (namely, any value between 6 and 255, e.g. 6) may be used for an untrusted access network (i.e. "untrusted IEEE 802.11a/b/g, WLAN"), and another newly defined value (namely, any value between 6 and 255, e.g. 7) may be used for a trusted access network (i.e. "trusted IEEE 802.11a/b/g, WLAN").

On the other hand, the trustworthiness indication may be transferred in a different parameter other than the access technology type option field representing the access technology type parameter. In this regard, two different values in such dedicated parameter are assigned for the trusted and untrusted properties of the respective access network (i.e. "trusted" or "untrusted"), the access technology type of which is indicated in the access technology type option field representing the access technology type parameter (i.e. "IEEE 802.11a/b/g, WLAN"). Such dedicated parameter may have any length, as 1 bit would be sufficient.

Generally, any message carrying the access technology type option field according to PMIPv6 is usable for a corresponding signaling, such as e.g. Proxy Binding Update and Proxy Binding Acknowledgment messages.

In a GTPv1/GTPv2-based signaling according to exemplary embodiments of the present invention, the access technology type is transferred in the radio access technology (RAT) type information element, particularly in the (8 bit) value field thereof, thus representing an access technology type parameter. Currently, the value 3 is defined for the access technology type "IEEE 802.11a/b/g, WLAN".

On the one hand, the trustworthiness indication may also be transferred in the RAT type element representing the access technology type parameter, wherein two different values in the access technology type parameter are assigned for the trusted and untrusted properties of the respective access network. As one option, in the present example case, the value defined for the access technology type "IEEE 802.11a/b/g, WLAN" (namely, the value 3) may be used for an untrusted access network (i.e. "untrusted IEEE 802.11a/b/g, WLAN"), while a newly defined value (namely, any value between 6 and 255, e.g. 6) may be used for a trusted access network (i.e. "trusted IEEE 802.11a/b/g, WLAN"). As another option, in the present example case, a newly defined value (namely, any value between 6 and 255, e.g. 6) may be used for an untrusted access network (i.e. "untrusted IEEE 802.11a/b/g, WLAN"), and another newly defined value (namely, any value between 6 and 255, e.g. 7) may be used for a trusted access network (i.e. "trusted IEEE 802.11a/b/g, WLAN").

On the other hand, the trustworthiness indication may be transferred in a different parameter other than the RAT type element representing the access technology type parameter. In this regard, two different values in such dedicated parameter are assigned for the trusted and untrusted properties of the respective access network, (i.e. "trusted" or "untrusted") the access technology type of which is indicated in the RAT type element representing the access technology type parameter (i.e. "IEEE 802.11a/b/g, WLAN"). Such dedicated parameter may have any length, as 1 bit would be sufficient.

Generally, any message carrying the access technology type option field according to GTPv1 is usable for a corresponding signaling, such as e.g. Create PDP Context Request, Update PDP Context Request, SGSN Context Request, and Location Change Notification Request messages. Similarly, any message carrying the access technology type option field according to GTPv2 is usable for a corresponding signaling, such as e.g. Create Session Request, Bearer Resource Command, Modify Bearer Request, Context Request, and Change Notification Request messages.

According to exemplary embodiments of the present invention, the CN NE may acquire the trustworthiness indication and the access technology type, as signaled from the AN NE, using any one of the different protocol mechanisms used for signaling purposes. Namely, the trusted or untrusted property of the access network may be acquired on the basis of a dedicated value in an access technology type parameter (when the trustworthiness of an access network of a specific access technology type is indicated by way of either one of two different values within the parameter dedicated for access technology type indication) or on the basis of a dedicated parameter together with (i.e. in combination with) an access technology type parameter (when the trustworthiness of an access network of a specific access technology type is indicated by way of either one of two different values of another parameter together with a specific value within the parameter dedicated for access technology type indication).

According to exemplary embodiments of the present invention, the CN NE may then operate, i.e. perform any functionality or the like, according to the detected trusted or untrusted property of the access network, which is detected on the basis of the acquired trustworthiness indication and access technology type of the access network. Namely, when knowing whether the (e.g. WiFi) access is trusted or untrusted, the PGW or the GGSN (or any other applicable CN NE) is able to perform respective functionalities in a correct or appropriate way.

Such trustworthiness-dependent operation at the CN NE may for example comprise indicating the trusted or untrusted property of the access network to a network element for at least one of policy and charging control, authentication, authorization and accounting, online charging control, offline charging control. For example, "trusted WLAN" or "untrusted WLAN" can be indicated for policy and charging control on a Gx interface or reference point e.g. towards a PCRF element (e.g. from/via a PCEF element), and/or "trusted WLAN" or "untrusted WLAN" can be indicated on Radius/Diameter interfaces (e.g. a SGi interface) or any other AAA-related interface (e.g. towards operator's IP services, such as IMS, PSS, etc.), and/or "trusted WLAN" or "untrusted WLAN" can be indicated in CDRs for offline charging, and/or trusted WLAN" or "untrusted WLAN" can be indicated for online charging on a Gy interface towards a OCS element (e.g. from/via a PCEF element).

Further, such trustworthiness-dependent operation at the CN NE may for example relate to lawful interception. Hence, the PGW or GGSN (or any other CN NE) may also use the trustworthiness indication (e.g. "trusted WLAN" or "untrusted WLAN") for lawful interception purposes. For example, the trustworthiness indication from the access network may be used to determine which information elements are delivered for lawful interception to which network element/s. Stated in other words, the PGW or the GGSN may indicate the trusted or untrusted property of the access network (e.g. "trusted WLAN" or "untrusted WLAN") to a network element for lawful interception, such as a LIG, and/or the PGW or the GGSN may determine intercept related information (IRI) for lawful interception and/or provide intercept related information (IRI) to a network element for lawful interception, such as a LIG.

Further, such trustworthiness-dependent operation at the CN NE may for example comprise providing information to a network element in the access network and/or the core network. For example, in CDRs, other fields (apart from a trustworthiness-related indication) can also be filled in a correct/appropriate way e.g. by the PGW, such as e.g. Serving Node Type = Access GW in trusted (e.g. WiFi) access or Serving Node Type = ePDG in untrusted (e.g. WiFi) access. Also, additional parameters may be given e.g. to the Access GW in a trusted (e.g. WiFi) access, such as e.g. IP configuration parameters, e.g. a default router address and/or a prefix length and/or a DHCP support mode indication.

Still further, such trustworthiness-dependent operation at the CN NE may for example comprise controlling transmission of router advertisement messages to a network element in the access network and/or the core network. For example, especially when GTPv1/GTPv2 is used for signaling purposes, it may be controlled not to send Router Advertisement in a trusted (e.g. WiFi) access (because this is sent by the Access GW) but to send Router Advertisement in an untrusted (e.g. WiFi) access.

Accordingly, as indicated by way of dashed arrows in different direction starting from the CN NE in Figure 2, corresponding information regarding the trustworthiness of an access network (e.g. its trusted/untrusted property), possibly together with further relevant information/data, may be provided from the CN NE performing the aforementioned procedure towards other network elements, in the access network and/or the core network. Such other network elements thus also know whether the (e.g. WiFi) access is trusted or untrusted, and are thus also able to perform respective functionalities in a correct or appropriate way. Namely, other nodes, e.g. the PCRF, AAA, charging nodes, etc., may use information e.g. on "trusted WLAN" or "untrusted WLAN" for their own purposes when this information is made available to them by the corresponding CN NE, such as e.g. the PGW.

In view of the above, exemplary embodiments of the present invention provide for the signaling of additional information regarding the trustworthiness of an access network, especially e.g. a non-3GPP access network, towards a core network, especially e.g. on a S2a interface or on a Gn interface or any other applicable interface, thereby enabling the core network, especially e.g. a PGW or a GGSN or any other applicable CN NE, to operate according to a trusted or untrusted property of the access network, which is detectable on the basis of such additional information in combination with access technology type information of the access network. Thereby, a reliable verification of the trusted or untrusted property of the access network can be achieved.

Accordingly, exemplary embodiments of the present invention enable (support of) trusted non-3GPP (e.g. WiFi) connectivity to a 3GPP core network, i.e. the EPC or (evolved) packet core. Thereby, exemplary embodiments of the present invention exemplarily enable (support of) non-cellular (e.g. WiFi) offloading and similar functions.

Notwithstanding the above, alternative approaches for signaling such additional information regarding the trustworthiness of an access network from the access network towards the core network are also conceivable.

As a first example, it would be possible to perform signaling from a trusted (e.g. WiFi) access network and from an untrusted (e.g. WiFi) access network via different IP addresses of the relevant gateway element in the core network, e.g. the PGW or the GGSN or any other applicable CN NE. Accordingly, the trustworthiness of the access network could be detected on the basis of the respective IP address used (when e.g. a specific IP address is used for trusted (e.g. WiFi) access).

As a second example, it would be possible to use different APNs for the signaling from a trusted (e.g. WiFi) access network and from an untrusted (e.g. WiFi) access network to the relevant gateway element in the core network, e.g. the PGW or the GGSN or any other applicable CN NE. Accordingly, the trustworthiness of the access network could be detected on the basis of the respective APN used (when e.g. a specific APN is used for trusted (e.g. WiFi) access).

The above-described procedures and functions may be implemented by respective functional elements, processors, or the like, as described below.

While in the foregoing exemplary embodiments of the present invention are described mainly with reference to methods, procedures and functions, corresponding exemplary embodiments of the present invention also cover respective apparatuses, network nodes and systems, including both software and/or hardware thereof.

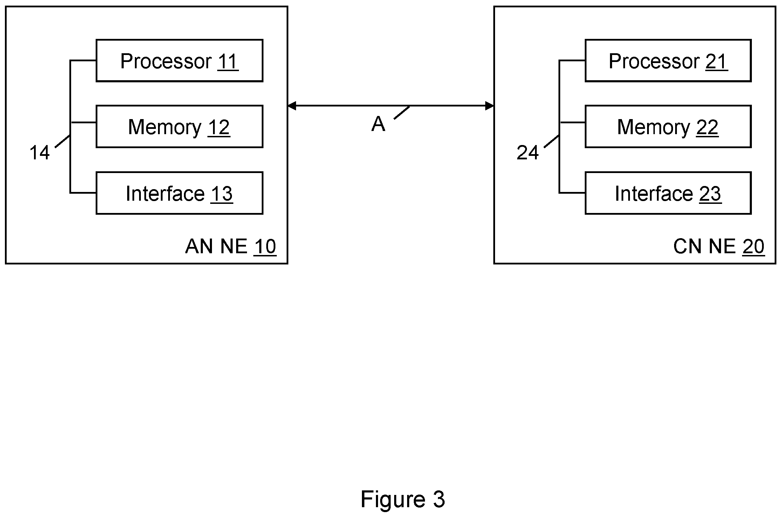

Respective exemplary embodiments of the present invention are described below referring to Figure 3, while for the sake of brevity reference is made to the detailed description of respective corresponding schemes, methods and functionality, principles and operations according to Figures 1 and 2.

In Figure 3 below, the solid line blocks are basically configured to perform respective operations as described above. The entirety of solid line blocks are basically configured to perform the methods and operations as described above, respectively. With respect to Figure 3, it is to be noted that the individual blocks are meant to illustrate respective functional blocks implementing a respective function, process or procedure, respectively. Such functional blocks are implementation-independent, i.e. may be implemented by means of any kind of hardware or software, respectively. The arrows and lines interconnecting individual blocks are meant to illustrate an operational coupling therebetween, which may be a physical and/or logical coupling, which on the one hand is implementation-independent (e.g. wired or wireless) and on the other hand may also comprise an arbitrary number of intermediary functional entities not shown. The direction of arrow is meant to illustrate the direction in which certain operations are performed and/or the direction in which certain data is transferred.

Further, in Figure 3, only those functional blocks are illustrated, which relate to any one of the above-described methods, procedures and functions. A skilled person will acknowledge the presence of any other conventional functional blocks required for an operation of respective structural arrangements, such as e.g. a power supply, a central processing unit, respective memories or the like. Among others, memories are provided for storing programs or program instructions for controlling the individual functional entities to operate as described herein.

Figure 3 shows a schematic diagram of exemplary apparatuses of according to exemplary embodiments of the present invention.

In view of the above, the thus described apparatuses 10 and 20 are suitable for use in practicing the exemplary embodiments of the present invention, as described herein.

The thus described apparatus 10 may represent a (part of a) network element of an access network, e.g. a (trusted) non-3GPP access, such as a base station or access point, an access controller, any gateway element such as an access gateway, or the like, and may be configured to be involved in a system architecture as evident from Figure 1 and to perform a procedure and/or exhibit a functionality as evident from the AN NE side of Figure 2. The thus described apparatus 20 may represent a (part of a) network element of a core network, e.g. a 3GPP core or EPC, such as a PGW or a GGSN or any other applicable CN NE, and may be configured to be involved in a system architecture as evident from Figure 1 and to perform a procedure and/or exhibit a functionality as evident from the CN NE side of Figure 2.

As indicated in Figure 3, according to exemplary embodiments of the present invention, each of the apparatuses comprises a processor 11/21, a memory 12/22 and an interface 13/23, which are connected by a bus 14/24 or the like, and the apparatuses may be connected via link A, respectively.

The processor 11/21 and/or the interface 13/23 may also include a modem or the like to facilitate communication over a (hardwire or wireless) link, respectively. The interface 13/23 may include a suitable transceiver coupled to one or more antennas or communication means for (hardwire or wireless) communications with the linked or connected device(s), respectively. The interface 13/23 is generally configured to communicate with at least one other apparatus, i.e. the interface thereof.

The memory 12/22 may store respective programs assumed to include program instructions or computer program code that, when executed by the respective processor, enables the respective electronic device or apparatus to operate in accordance with the exemplary embodiments of the present invention.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "processor configured to [cause the apparatus to] perform xxx-ing" is construed to be equivalent to an expression such as "means for xxx-ing").

In its most basic form, according to exemplary embodiments of the present invention, the apparatus 10 or its processor 11 is configured to perform signaling a trustworthiness indication of an access network with respect to a core network together with an access technology type of the access network towards the core network.

Accordingly, the apparatus 10 may comprise respective means for signaling.

In its most basic form, according to exemplary embodiments of the present invention, the apparatus 20 or its processor 21 is configured to perform acquiring a trustworthiness indication of an access network with respect to a core network together with an access technology type of the access network from the access network, detecting a trusted or untrusted property of the access network of the access technology type based on the acquired trustworthiness indication and access technology type, and operating according to the detected trusted or untrusted property of the access network.

Accordingly, the apparatus 20 may comprise respective means for acquiring, means for detecting, and means for operating. As outlined above, in terms of the operating, the apparatus 20 may comprise respective means for indicating, means for providing, and means for controlling

For further details regarding the operability/functionality of the individual apparatuses, reference is made to the abode description in connection with any one of Figures 1 and 2, respectively.

According to exemplarily embodiments of the present invention, the processor 11/21, the memory 12/22 and the interface 13/23 may be implemented as individual modules, chips, chipsets, circuitries or the like, or one or more of them can be implemented as a common module, chip, chipset, circuitry or the like, respectively.

According to exemplarily embodiments of the present invention, a system may comprise any conceivable combination of the thus depicted devices/apparatuses and other network elements, which are configured to cooperate as described above.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for example.

Apparatuses and/or means or parts thereof can be implemented as individual devices, but this does not exclude that they may be implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present invention also covers any conceivable combination of method steps and operations described above, and any conceivable combination of nodes, apparatuses, modules or elements described above, as long as the above-described concepts of methodology and structural arrangement are applicable.

In view of the above, there are provided measures for access network trustworthiness detection in core network. Such measures exemplarily comprise signaling of a trustworthiness indication of an access network with respect to a core network together with an access technology type of the access network from the access network, acquisition of the trustworthiness indication in the core network, detection of a trusted or untrusted property of the access network of the access technology type based on the acquired trustworthiness indication and access technology type in the core network, and operation according to the detected trusted or untrusted property of the access network in the core network. Such measures are exemplarily, but not exclusively, applicable in the context of a non-3GPP access network providing IP connectivity to a 3GPP core network. The measures according to exemplary embodiments of the present invention may be applied for any kind of network environment, such as for example for communication systems in accordance with any related standards of 3GPP and/or 3GPP2 and/or IETF and/or IEEE, and so on., e.g. LTE/EPS standards (including LTE-Advanced and its evolutions) and/or UMTS standards, and/or WCDMA standards and/or HSPA standards.

### List of acronyms and abbreviations

- 3GPP: Third Generation Partnership Project
- 3GPP: Third Generation Partnership Project 2
- AAA: Authentication, Authorization and Accounting
- APN: Access Point Name
- AN: Access Network
- CDR: Charging Data Record
- CN: Core Network
- DHCP: Dynamic Host Configuration Protocol
- EPC: Evolved Packet Core
- ePDG: evolved Packet Data Gateway
- EPS: Evolved Packet System
- E-UTRAN: Evolved UTRAN
- GGSN: Gateway GPRS Support Node
- GPRS: General Packet Radio Service
- GTPv1 GPRS: Tunneling Protocol version 1
- GTPv2 GPRS: Tunneling Protocol version 2
- HSPA: High Speed Packet Access
- IEEE: Institute of Electrical and Electronics Engineers
- IETF: Internet Engineering Task Force
- IMS: IP Multimedia Subsystem
- IP: Internet Protocol
- IRI: Intercept Related Information
- LIG: Lawful Interception Gateway
- LTE: Long Term Evolution
- MBMS: Multimedia Broadcast Multicast Service
- NE: Network Element
- OCS: Online Charging System
- PCEF: Policy and Charging Enforcement Function
- PCRF: Policy and Charging Rules Function
- PDN: Packet Data Network
- PDP: Packet Data Protocol
- PGW: PDN Gateway
- PMIPv6: Proxy Mobile IP version 6
- PSS: Packet-Switched Streaming Service
- RAT: Radio Access Technology
- SGSN: Serving GPRS Support Node
- S-GW: Serving Gateway
- UMTS: Universal Mobile Telecommunications System
- UTRAN: Universal Terrestrial Radio Access Network
- WCDMA: Wideband Code Division Multiple Access
- WiMAX: Worldwide Interoperability for Microwave Access
- WLAN: Wireless Local Area Network

## Claims

1. A method, operable at or by a packet data network gateway, comprising
acquiring a trustworthiness indication of an access network with respect to a core network together with an access technology type of the access network by receiving a signaling message from the access network, said signaling message being a message according to a proxy mobile internet protocol or a message according to a general packet radio service tunneling protocol,
detecting a trusted or untrusted property of the access network of the access technology type based on the acquired trustworthiness indication and access technology type, and
operating according to the detected trusted or untrusted property of the access network, wherein
the trustworthiness indication and the access technology type are acquired from an access technology type parameter, one value of the access technology type parameter indicating a trusted property of the access network of the access technology type and another value of the access technology type parameter indicating an untrusted property of the access network of the access technology type, or
the access technology type is acquired from an access technology type parameter and the trustworthiness indication is acquired from a trustworthiness parameter indicating a trusted or untrusted property of the access network of the access technology type indicated in the access technology type parameter,
wherein the access technology type parameter comprises an access technology type option field in case said signaling message is a message according to a proxy mobile internet protocol or a radio access technology type element in case said signaling message is a message according to a general packet radio service tunneling protocol, and the trustworthiness parameter comprises a trustworthiness-related option field in case said signaling message is a message according to a proxy mobile internet protocol or a trustworthiness-related element in case said signaling message is a message according to a general packet radio service tunneling protocol.

2. A method, operable at or by a gateway general packet radio service support node, comprising
acquiring a trustworthiness indication of an access network with respect to a core network together with an access technology type of the access network by receiving a signaling message from the access network, said signaling message being a message according to a general packet radio service tunneling protocol,
detecting a trusted or untrusted property of the access network of the access technology type based on the acquired trustworthiness indication and access technology type, and
operating according to the detected trusted or untrusted property of the access network, wherein
the trustworthiness indication and the access technology type are acquired from an access technology type parameter, one value of the access technology type parameter indicating a trusted property of the access network of the access technology type and another value of the access technology type parameter indicating an untrusted property of the access network of the access technology type, or
the access technology type is acquired from an access technology type parameter and the trustworthiness indication is acquired from a trustworthiness parameter indicating a trusted or untrusted property of the access network of the access technology type indicated in the access technology type parameter,
wherein the access technology type parameter comprises a radio access technology type element in case said signaling message is a message according to a general packet radio service tunneling protocol, and the trustworthiness parameter comprises a trustworthiness-related element in case said signaling message is a message according to a general packet radio service tunneling protocol.

3. The method according to any of claims 1 and 2, wherein the operating comprises at least one of
indicating the trusted or untrusted property of the access network to a network element for at least one of policy and charging control, authentication, authorization and accounting, online charging control, offline charging control, and lawful interception,
providing information to a network element in the access network and/or the core network,
controlling transmission of router advertisement messages to a network element in the access network and/or the core network, and
determining intercept related information for lawful interception and/or providing intercept related information to a network element for lawful interception.

4. The method according to any one of claims 1 to 3, wherein
the core network and the access network are comprised in an evolved packet system, and/or
the core network comprises a 3GPP core network and the access network comprises a non-3GPP access network, and/or
the core network comprises an evolved packet core and the access network comprises a WiFi access.

5. The method according to any one of claims 1 to 4, wherein
the method is operable at or by a network element in the core network, and/or
the access network provides for internet protocol connectivity of a terminal to the core network via a network element in the access network, and/or
the acquiring comprises acquiring a signaling via at least an access gateway.

6. An apparatus, operable as or at a packet data network gateway, comprising
an interface configured to communicate with at least another apparatus,
a memory configured to store computer program code, and
a processor configured to cause the apparatus to perform:
acquiring a trustworthiness indication of an access network with respect to a core network together with an access technology type of the access network by receiving a signaling message from the access network, said signaling message being a message according to a proxy mobile internet protocol or a message according to a general packet radio service tunneling protocol,
detecting a trusted or untrusted property of the access network of the access technology type based on the acquired trustworthiness indication and access technology type, and
operating according to the detected trusted or untrusted property of the access network, wherein the processor is configured to cause the apparatus to perform the acquiring such that
the trustworthiness indication and the access technology type are acquired from an access technology type parameter, one value of the access technology type parameter indicating a trusted property of the access network of the access technology type and another value of the access technology type parameter indicating an untrusted property of the access network of the access technology type, or
the access technology type is acquired from an access technology type parameter and the trustworthiness indication is acquired from a trustworthiness parameter indicating a trusted or untrusted property of the access network of the access technology type indicated in the access technology type parameter,
wherein the access technology type parameter comprises an access technology type option field in case said signaling message is a message according to a proxy mobile internet protocol or a radio access technology type element in case said signaling message is a message according to a general packet radio service tunneling protocol, and the trustworthiness parameter comprises a trustworthiness-related option field in case said signaling message is a message according to a proxy mobile internet protocol or a trustworthiness-related element in case said signaling message is a message according to a general packet radio service tunneling protocol.

7. An apparatus, operable as or at a gateway general packet radio service support node, comprising
an interface configured to communicate with at least another apparatus,
a memory configured to store computer program code, and
a processor configured to cause the apparatus to perform:
acquiring a trustworthiness indication of an access network with respect to a core network together with an access technology type of the access network by receiving a signaling message from the access network, said signaling message being a message according to a general packet radio service tunneling protocol,
detecting a trusted or untrusted property of the access network of the access technology type based on the acquired trustworthiness indication and access technology type, and
operating according to the detected trusted or untrusted property of the access network, wherein the processor is configured to cause the apparatus to perform the acquiring such that
the trustworthiness indication and the access technology type are acquired from an access technology type parameter, one value of the access technology type parameter indicating a trusted property of the access network of the access technology type and another value of the access technology type parameter indicating an untrusted property of the access network of the access technology type, or
the access technology type is acquired from an access technology type parameter and the trustworthiness indication is acquired from a trustworthiness parameter indicating a trusted or untrusted property of the access network of the access technology type indicated in the access technology type parameter,
wherein the access technology type parameter comprises a radio access technology type element in case said signaling message is a message according to a general packet radio service tunneling protocol, and the trustworthiness parameter comprises a trustworthiness-related element in case said signaling message is a message according to a general packet radio service tunneling protocol.

8. The apparatus according to any of claims 6 and 7, wherein the processor is configured to cause the apparatus to perform, in the operating, at least one of
indicating the trusted or untrusted property of the access network to a network element for at least one of policy and charging control, authentication, authorization and accounting, online charging control, offline charging control, and lawful interception,
providing information to a network element in the access network and/or the core network,
controlling transmission of router advertisement messages to a network element in the access network and/or the core network, and
determining intercept related information for lawful interception and/or providing intercept related information to a network element for lawful interception.

9. The apparatus according to any one of claims 6 to 8, wherein
the core network and the access network are comprised in an evolved packet system, and/or
the core network comprises a 3GPP core network and the access network comprises a non-3GPP access network, and/or
the core network comprises an evolved packet core and the access network comprises a WiFi access.

10. The apparatus according to any one of claims 6 to 9, wherein
the apparatus is operable as or at a network element in the core network, and/or
the access network provides for internet protocol connectivity of a terminal to the core network via a network element in the access network, and/or
the processor is configured to cause the apparatus to perform the acquiring by acquiring a signaling via at least an access gateway.

11. A computer program product comprising computer-executable computer program code which, when the program is run on a computer, is configured to cause the computer to carry out the method according to any one of claims 1 to 5.

12. The computer program product according to claim 11, wherein the computer program product comprises a computer-readable medium on which the computer-executable computer program code is stored, and/or wherein the program is directly loadable into an internal memory of the processor.

## Patentansprüche

1. Verfahren, betreibbar an einem oder durch ein Paketdatennetzwerk-Gateway, umfassend:
Beziehen einer Vertrauenswürdigkeitsangabe eines Zugangsnetzwerks in Bezug auf ein Kernnetzwerk zusammen mit einem Zugangstechnologietyp des Zugangsnetzwerks durch Empfangen einer Signalisierungsnachricht von dem Zugangsnetzwerk, wobei die Signalisierungsnachricht eine Nachricht gemäß einem Proxy-Mobile-Internet-Protokoll oder eine Nachricht gemäß einem General-Packet-Radio-Service-Tunneling-Protokoll ist,
Erkennen einer vertrauenswürdigen oder nicht vertrauenswürdigen Eigenschaft des Zugangsnetzwerks des Zugangstechnologietyps auf der Basis der bezogenen Vertrauenswürdigkeitsangabe und des bezogenen Zugangstechnologietyps, und
Betreiben gemäß der erkannten vertrauenswürdigen oder nicht vertrauenswürdigen Eigenschaft des Zugangsnetzwerks, wobei
die Vertrauenswürdigkeitsangabe und der Zugangstechnologietyp aus einem Zugangstechnologietypparameter bezogen werden, wobei ein Wert des Zugangstechnologietypparameters eine vertrauenswürdige Eigenschaft des Zugangsnetzwerks des Zugangstechnologietyps angibt und ein anderer Wert des Zugangstechnologietypparameters eine nicht vertrauenswürdige Eigenschaft des Zugangsnetzwerks des Zugangstechnologietyps angibt, oder
der Zugangstechnologietyp aus einem Zugangstechnologietypparameter bezogen wird und die Vertrauenswürdigkeitsangabe aus einem Vertrauenswürdigkeitsparameter bezogen wird, der eine vertrauenswürdige oder nicht vertrauenswürdige Eigenschaft des Zugangsnetzwerks des Zugangstechnologietyps angibt, die in dem Zugangstechnologietypparameter angegeben ist,
wobei der Zugangstechnologietypparameter ein Zugangstechnologietyp-Optionsfeld in dem Fall, in dem die Signalisierungsnachricht eine Nachricht gemäß einem Proxy-Mobile-Internet-Protokoll ist, oder ein Funkzugangstechnologietyp-Element in dem Fall, in dem die Signalisierungsnachricht eine Nachricht gemäß einem General-Packet-Radio-Service-Tunneling-Protokoll ist, umfasst, und der Vertrauenswürdigkeitsparameter ein vertrauenswürdigkeitsbezogenes Optionsfeld in dem Fall, in dem die Signalisierungsnachricht eine Nachricht gemäß einem Proxy-Mobile-Internet-Protokoll ist, oder ein vertrauenswürdigkeitsbezogenes Element in dem Fall, in dem die Signalisierungsnachricht eine Nachricht gemäß einem General-Packet-Radio-Service-Tunneling-Protokoll ist, umfasst.

2. Verfahren, betreibbar an einem oder durch einen Gateway-General-Packet-Radio-Service-Support-Knoten, umfassend:
Beziehen einer Vertrauenswürdigkeitsangabe eines Zugangsnetzwerks in Bezug auf ein Kernnetzwerk zusammen mit einem Zugangstechnologietyp des Zugangsnetzwerks durch Empfangen einer Signalisierungsnachricht von dem Zugangsnetzwerk, wobei die Signalisierungsnachricht eine Nachricht gemäß einem General-Packet-Radio-Service-Tunneling-Protokoll ist,
Erkennen einer vertrauenswürdigen oder nicht vertrauenswürdigen Eigenschaft des Zugangsnetzwerks des Zugangstechnologietyps auf der Basis der bezogenen Vertrauenswürdigkeitsangabe und des bezogenen Zugangstechnologietyps, und
Betreiben gemäß der erkannten vertrauenswürdigen oder nicht vertrauenswürdigen Eigenschaft des Zugangsnetzwerks, wobei
die Vertrauenswürdigkeitsangabe und der Zugangstechnologietyp aus einem Zugangstechnologietypparameter bezogen werden, wobei ein Wert des Zugangstechnologietypparameters eine vertrauenswürdige Eigenschaft des Zugangsnetzwerks des Zugangstechnologietyps angibt und ein anderer Wert des Zugangstechnologietypparameters eine nicht vertrauenswürdige Eigenschaft des Zugangsnetzwerks des Zugangstechnologietyps angibt, oder
der Zugangstechnologietyp aus einem Zugangstechnologietypparameter bezogen wird und die Vertrauenswürdigkeitsangabe aus einem Vertrauenswürdigkeitsparameter bezogen wird, der eine vertrauenswürdige oder nicht vertrauenswürdige Eigenschaft des Zugangsnetzwerks des Zugangstechnologietyps angibt, die in dem Zugangstechnologietypparameter angegeben ist,
wobei der Zugangstechnologietypparameter ein Funkzugangstechnologietyp-Element in dem Fall, in dem die Signalisierungsnachricht eine Nachricht gemäß einem General-Packet-Radio-Service-Tunneling-Protokoll ist, umfasst, und der Vertrauenswürdigkeitsparameter ein vertrauenswürdigkeitsbezogenes Element in dem Fall, in dem die Signalisierungsnachricht eine Nachricht gemäß einem General-Packet-Radio-Service-Tunneling-Protokoll ist, umfasst.

3. Verfahren nach einem der Ansprüche 1 und 2, wobei das Betreiben mindestens eines von
Angeben der vertrauenswürdigen oder nicht vertrauenswürdigen Eigenschaft des Zugangsnetzwerks gegenüber einem Netzwerkelement für mindestens eine von Richtlinien- und Abrechnungskontrolle, Authentifizierung, Autorisierung und Verrechnung, Online-Abrechnungskontrolle, Offline-Abrechnungskontrolle und rechtmäßiger Abfangung,
Bereitstellen von Informationen an ein Netzwerkelement in dem Zugangsnetzwerk und/oder dem Kernnetzwerk,
Steuern einer Übertragung von Router-Werbenachrichten an ein Netzwerkelement in dem Zugangsnetzwerk und/oder dem Kernnetzwerk, und
Bestimmen von Intercept-bezogenen Informationen für eine rechtmäßige Abfangung und/oder Bereitstellen von Intercept-bezogenen Informationen an ein Netzwerkelement für eine rechtmäßige Abfangung umfasst.

4. Verfahren nach einem der Ansprüche 1 bis 3, wobei
das Kernnetzwerk und das Zugangsnetzwerk von einem Evolved-Packet-System umfasst sind, und/oder
das Kernnetzwerk ein 3GPP-Kernnetzwerk umfasst und das Zugangsnetzwerk ein Nicht-3GPP-Zugangsnetzwerk umfasst, und/oder
das Kernnetzwerk einen Evolved-Packet-Kern umfasst und das Zugangsnetzwerk einen WiFi-Zugang umfasst.

5. Verfahren nach einem der Ansprüche 1 bis 4, wobei
das Verfahren an einem oder durch ein Netzwerkelement in dem Kernnetzwerk betreibbar ist, und/oder
das Zugangsnetzwerk Internet-Protokoll-Konnektivität eines Endgeräts zu dem Kernnetzwerk mittels einem Netzwerkelement in dem Zugangsnetzwerk bereitstellt, und/oder
das Beziehen ein Beziehen einer Signalisierung mittels mindestens einem Zugangs-Gateway umfasst.

6. Vorrichtung, betreibbar als ein oder an einem Paketdatennetzwerk-Gateway, umfassend:
eine Schnittstelle, die dazu konfiguriert ist, mit mindestens einer anderen Vorrichtung zu kommunizieren,
einen Speicher, der dazu konfiguriert ist, Computerprogrammcode zu speichern, und
einen Prozessor, der dazu konfiguriert ist zu bewirken, dass die Vorrichtung Folgendes durchführt:
Beziehen einer Vertrauenswürdigkeitsangabe eines Zugangsnetzwerks in Bezug auf ein Kernnetzwerk zusammen mit einem Zugangstechnologietyp des Zugangsnetzwerks durch Empfangen einer Signalisierungsnachricht von dem Zugangsnetzwerk, wobei die Signalisierungsnachricht eine Nachricht gemäß einem Proxy-Mobile-Internet-Protokoll oder eine Nachricht gemäß einem General-Packet-Radio-Service-Tunneling-Protokoll ist,
Erkennen einer vertrauenswürdigen oder nicht vertrauenswürdigen Eigenschaft des Zugangsnetzwerks des Zugangstechnologietyps auf der Basis der bezogenen Vertrauenswürdigkeitsangabe und des bezogenen Zugangstechnologietyps, und
Betreiben gemäß der erkannten vertrauenswürdigen oder nicht vertrauenswürdigen Eigenschaft des Zugangsnetzwerks, wobei der Prozessor dazu konfiguriert ist zu bewirken, dass die Vorrichtung das Beziehen durchführt, so dass
die Vertrauenswürdigkeitsangabe und der Zugangstechnologietyp aus einem Zugangstechnologietypparameter bezogen werden, wobei ein Wert des Zugangstechnologietypparameters eine vertrauenswürdige Eigenschaft des Zugangsnetzwerks des Zugangstechnologietyps angibt und ein anderer Wert des Zugangstechnologietypparameters eine nicht vertrauenswürdige Eigenschaft des Zugangsnetzwerks des Zugangstechnologietyps angibt, oder
der Zugangstechnologietyp aus einem Zugangstechnologietypparameter bezogen wird und die Vertrauenswürdigkeitsangabe aus einem Vertrauenswürdigkeitsparameter bezogen wird, der eine vertrauenswürdige oder nicht vertrauenswürdige Eigenschaft des Zugangsnetzwerks des Zugangstechnologietyps angibt, die in dem Zugangstechnologietypparameter angegeben ist,
wobei der Zugangstechnologietypparameter ein Zugangstechnologietyp-Optionsfeld in dem Fall, in dem die Signalisierungsnachricht eine Nachricht gemäß einem Proxy-Mobile-Internet-Protokoll ist, oder ein Funkzugangstechnologietyp-Element in dem Fall, in dem die Signalisierungsnachricht eine Nachricht gemäß einem General-Packet-Radio-Service-Tunneling-Protokoll ist, umfasst, und der Vertrauenswürdigkeitsparameter ein vertrauenswürdigkeitsbezogenes Optionsfeld in dem Fall, in dem die Signalisierungsnachricht eine Nachricht gemäß einem Proxy-Mobile-Internet-Protokoll ist, oder ein vertrauenswürdigkeitsbezogenes Element in dem Fall, in dem die Signalisierungsnachricht eine Nachricht gemäß einem General-Packet-Radio-Service-Tunneling-Protokoll ist, umfasst.

7. Vorrichtung, betreibbar als ein oder an einem Gateway-General-Packet-Radio-Service-Support-Knoten, umfassend:
eine Schnittstelle, die dazu konfiguriert ist, mit mindestens einer anderen Vorrichtung zu kommunizieren,
einen Speicher, der dazu konfiguriert ist, Computerprogrammcode zu speichern, und
einen Prozessor, der dazu konfiguriert ist zu bewirken, dass die Vorrichtung Folgendes durchführt:
Beziehen einer Vertrauenswürdigkeitsangabe eines Zugangsnetzwerks in Bezug auf ein Kernnetzwerk zusammen mit einem Zugangstechnologietyp des Zugangsnetzwerks durch Empfangen einer Signalisierungsnachricht von dem Zugangsnetzwerk, wobei die Signalisierungsnachricht eine Nachricht gemäß einem General-Packet-Radio-Service-Tunneling-Protokoll ist,
Erkennen einer vertrauenswürdigen oder nicht vertrauenswürdigen Eigenschaft des Zugangsnetzwerks des Zugangstechnologietyps auf der Basis der bezogenen Vertrauenswürdigkeitsangabe und des bezogenen Zugangstechnologietyps, und
Betreiben gemäß der erkannten vertrauenswürdigen oder nicht vertrauenswürdigen Eigenschaft des Zugangsnetzwerks, wobei der Prozessor dazu konfiguriert ist zu bewirken, dass die Vorrichtung das Beziehen durchführt, so dass
die Vertrauenswürdigkeitsangabe und der Zugangstechnologietyp aus einem Zugangstechnologietypparameter bezogen werden, wobei ein Wert des Zugangstechnologietypparameters eine vertrauenswürdige Eigenschaft des Zugangsnetzwerks des Zugangstechnologietyps angibt und ein anderer Wert des Zugangstechnologietypparameters eine nicht vertrauenswürdige Eigenschaft des Zugangsnetzwerks des Zugangstechnologietyps angibt, oder
der Zugangstechnologietyp aus einem Zugangstechnologietypparameter bezogen wird und die Vertrauenswürdigkeitsangabe aus einem Vertrauenswürdigkeitsparameter bezogen wird, der eine vertrauenswürdige oder nicht vertrauenswürdige Eigenschaft des Zugangsnetzwerks des Zugangstechnologietyps angibt, die in dem Zugangstechnologietypparameter angegeben ist,
wobei der Zugangstechnologietypparameter ein Funkzugangstechnologietyp-Element in dem Fall, in dem die Signalisierungsnachricht eine Nachricht gemäß einem General-Packet-Radio-Service-Tunneling-Protokoll ist, umfasst, und der Vertrauenswürdigkeitsparameter ein vertrauenswürdigkeitsbezogenes Element in dem Fall, in dem die Signalisierungsnachricht eine Nachricht gemäß einem General-Packet-Radio-Service-Tunneling-Protokoll ist, umfasst.

8. Vorrichtung nach einem der Ansprüche 6 und 7, wobei der Prozessor dazu konfiguriert ist zu bewirken, dass die Vorrichtung in dem Betreiben mindestens eines von
Angeben der vertrauenswürdigen oder nicht vertrauenswürdigen Eigenschaft des Zugangsnetzwerks gegenüber einem Netzwerkelement für mindestens eine von Richtlinien- und Abrechnungskontrolle, Authentifizierung, Autorisierung und Verrechnung, Online-Abrechnungskontrolle, Offline-Abrechnungskontrolle und rechtmäßiger Abfangung,
Bereitstellen von Informationen an ein Netzwerkelement in dem Zugangsnetzwerk und/oder dem Kernnetzwerk,
Steuern einer Übertragung von Router-Werbenachrichten an ein Netzwerkelement in dem Zugangsnetzwerk und/oder dem Kernnetzwerk, und
Bestimmen von Intercept-bezogenen Informationen für eine rechtmäßige Abfangung und/oder Bereitstellen von Intercept-bezogenen Informationen an ein Netzwerkelement für eine rechtmäßige Abfangung durchführt.

9. Vorrichtung nach einem der Ansprüche 6 bis 8, wobei
das Kernnetzwerk und das Zugangsnetzwerk von einem Evolved-Packet-System umfasst sind, und/oder
das Kernnetzwerk ein 3GPP-Kernnetzwerk umfasst und das Zugangsnetzwerk ein Nicht-3GPP-Zugangsnetzwerk umfasst, und/oder
das Kernnetzwerk einen Evolved-Packet-Kern umfasst und das Zugangsnetzwerk einen WiFi-Zugang umfasst.

10. Vorrichtung nach einem der Ansprüche 6 bis 9, wobei
die Vorrichtung als ein oder an einem Netzwerkelement in dem Kernnetzwerk betreibbar ist, und/oder
das Zugangsnetzwerk Internet-Protokoll-Konnektivität eines Endgeräts zu dem Kernnetzwerk mittels einem Netzwerkelement in dem Zugangsnetzwerk bereitstellt, und/oder
der Prozessor dazu konfiguriert ist zu bewirken, dass die Vorrichtung das Beziehen durch Beziehen einer Signalisierung mittels mindestens einem Zugangs-Gateway durchführt.

11. Computerprogrammprodukt, umfassend computerausführbaren Computerprogrammcode, der, wenn das Programm auf einem Computer laufen gelassen wird, dazu konfiguriert ist zu bewirken, dass der Computer das Verfahren nach einem der Ansprüche 1 bis 5 durchführt.

12. Computerprogrammprodukt nach Anspruch 11, wobei das Computerprogrammprodukt ein computerlesbares Medium umfasst, auf dem der computerausführbare Computerprogrammcode gespeichert ist, und/oder wobei das Programm direkt in einen internen Speicher des Prozessors ladbar ist.

## Revendications

1. Procédé, exploitable au niveau de ou par une passerelle de réseau de données par paquets, comprenant
l'acquisition d'une indication de degré de confiance d'un réseau d'accès par rapport à un réseau cœur conjointement avec un type de technologie d'accès du réseau d'accès en recevant un message de signalisation en provenance du réseau d'accès, ledit message de signalisation étant un message selon un protocole internet proxy mobile ou un message selon un protocole de tunnellisation de service général de radiocommunication par paquets,
la détection d'une propriété de confiance ou de non-confiance du réseau d'accès du type de technologie d'accès sur la base de l'indication de degré de confiance et du type de technologie d'accès acquis, et
le fonctionnement selon la propriété de confiance ou de non-confiance détectée du réseau d'accès, dans lequel
l'indication de degré de confiance et le type de technologie d'accès sont acquis à partir d'un paramètre de type de technologie d'accès, une valeur du paramètre de type de technologie d'accès indiquant une propriété de confiance du réseau d'accès du type de technologie d'accès et une autre valeur du paramètre de type de technologie d'accès indiquant une propriété de non-confiance du réseau d'accès du type de technologie d'accès, ou
le type de technologie d'accès est acquis à partir d'un paramètre de type de technologie d'accès et l'indication de degré de confiance est acquise à partir d'un paramètre de degré de confiance indiquant une propriété de confiance ou de non-confiance du réseau d'accès du type de technologie d'accès indiqué dans le paramètre de type de technologie d'accès,
dans lequel le paramètre de type de technologie d'accès comprend un champ d'option de type de technologie d'accès dans le cas où ledit message de signalisation est un message selon un protocole internet proxy mobile ou un élément de type de technologie d'accès radio dans le cas où ledit message de signalisation est un message selon un protocole de tunnellisation de service général de radiocommunication par paquets, et le paramètre de degré de confiance comprend un champ d'option lié au degré de confiance dans le cas où ledit message de signalisation est un message selon un protocole internet proxy mobile ou un élément lié au degré de confiance dans le cas où ledit message de signalisation est un message selon un protocole de tunnellisation de service général de radiocommunication par paquets.

2. Procédé, exploitable au niveau de ou par un nœud de support de service général de radiocommunication par paquets de passerelle, comprenant
l'acquisition d'une indication de degré de confiance d'un réseau d'accès par rapport à un réseau cœur conjointement avec un type de technologie d'accès du réseau d'accès en recevant un message de signalisation en provenance du réseau d'accès, ledit message de signalisation étant un message selon un protocole de tunnellisation de service général de radiocommunication par paquets,
la détection d'une propriété de confiance ou de non-confiance du réseau d'accès du type de technologie d'accès sur la base de l'indication de degré de confiance et du type de technologie d'accès acquis, et
le fonctionnement selon la propriété de confiance ou de non-confiance détectée du réseau d'accès, dans lequel
l'indication de degré de confiance et le type de technologie d'accès sont acquis à partir d'un paramètre de type de technologie d'accès, une valeur du paramètre de type de technologie d'accès indiquant une propriété de confiance du réseau d'accès du type de technologie d'accès et une autre valeur du paramètre de type de technologie d'accès indiquant une propriété de non-confiance du réseau d'accès du type de technologie d'accès, ou
le type de technologie d'accès est acquis à partir d'un paramètre de type de technologie d'accès et l'indication de degré de confiance est acquise à partir d'un paramètre de degré de confiance indiquant une propriété de confiance ou de non-confiance du réseau d'accès du type de technologie d'accès indiqué dans le paramètre de type de technologie d'accès,
dans lequel le paramètre de type de technologie d'accès comprend un élément de type de technologie d'accès radio dans le cas où ledit message de signalisation est un message selon un protocole de tunnellisation de service général de radiocommunication par paquets, et le paramètre de degré de confiance comprend un élément lié au degré de confiance dans le cas où ledit message de signalisation est un message selon un protocole de tunnellisation de service général de radiocommunication par paquets.

3. Procédé selon l'une quelconque des revendications 1 et 2, dans lequel le fonctionnement comprend au moins l'un parmi
l'indication de la propriété de confiance ou de non-confiance du réseau d'accès à un élément de réseau pour au moins l'un parmi un contrôle de politique et de taxation, une authentification, autorisation et comptabilité, un contrôle de taxation en ligne, un contrôle de taxation hors ligne, et une interception licite,
la fourniture d'informations à un élément de réseau dans le réseau d'accès et/ou le réseau cœur,
le contrôle de la transmission de messages d'annonce de routeur à un élément de réseau dans le réseau d'accès et/ou le réseau cœur, et
la détermination d'informations liées à l'interception pour une interception licite et/ou la fourniture d'informations liées à l'interception à un élément de réseau pour une interception licite.

4. Procédé selon l'une quelconque des revendications 1 à 3, dans lequel
le réseau cœur et le réseau d'accès sont compris dans un système de paquets évolué, et/ou
le réseau cœur comprend un réseau cœur 3GPP et le réseau d'accès comprend un réseau d'accès non-3GPP, et/ou
le réseau cœur comprend un cœur de paquets évolué et le réseau d'accès comprend un accès WiFi.

5. Procédé selon l'une quelconque des revendications 1 à 4, dans lequel
le procédé est exploitable au niveau de ou par un élément de réseau dans le réseau cœur, et/ou
le réseau d'accès fournit une connectivité de protocole internet d'un terminal au réseau cœur via un élément de réseau dans le réseau d'accès, et/ou
l'acquisition comprend l'acquisition d'une signalisation via au moins une passerelle d'accès.

6. Appareil, exploitable comme ou au niveau d'une passerelle de réseau de données par paquets, comprenant
une interface configurée pour communiquer avec au moins un autre appareil,
une mémoire configurée pour stocker un code de programme informatique, et
un processeur configuré pour amener l'appareil à effectuer :
l'acquisition d'une indication de degré de confiance d'un réseau d'accès par rapport à un réseau cœur conjointement avec un type de technologie d'accès du réseau d'accès en recevant un message de signalisation en provenance du réseau d'accès, ledit message de signalisation étant un message selon un protocole internet proxy mobile ou un message selon un protocole de tunnellisation de service général de radiocommunication par paquets,
la détection d'une propriété de confiance ou de non-confiance du réseau d'accès du type de technologie d'accès sur la base de l'indication de degré de confiance et du type de technologie d'accès acquis, et
le fonctionnement selon la propriété de confiance ou de non-confiance détectée du réseau d'accès, dans lequel le processeur est configuré pour amener l'appareil à effectuer l'acquisition de sorte que
l'indication de degré de confiance et le type de technologie d'accès sont acquis à partir d'un paramètre de type de technologie d'accès, une valeur du paramètre de type de technologie d'accès indiquant une propriété de confiance du réseau d'accès du type de technologie d'accès et une autre valeur du paramètre de type de technologie d'accès indiquant une propriété de non-confiance du réseau d'accès du type de technologie d'accès, ou
le type de technologie d'accès est acquis à partir d'un paramètre de type de technologie d'accès et l'indication de degré de confiance est acquise à partir d'un paramètre de degré de confiance indiquant une propriété de confiance ou de non-confiance du réseau d'accès du type de technologie d'accès indiqué dans le paramètre de type de technologie d'accès,
dans lequel le paramètre de type de technologie d'accès comprend un champ d'option de type de technologie d'accès dans le cas où ledit message de signalisation est un message selon un protocole internet proxy mobile ou un élément de type de technologie d'accès radio dans le cas où ledit message de signalisation est un message selon un protocole de tunnellisation de service général de radiocommunication par paquets, et le paramètre de degré de confiance comprend un champ d'option lié au degré de confiance dans le cas où ledit message de signalisation est un message selon un protocole internet proxy mobile ou un élément lié au degré de confiance dans le cas où ledit message de signalisation est un message selon un protocole de tunnellisation de service général de radiocommunication par paquets.

7. Appareil, exploitable comme ou au niveau d'un nœud de support de service général de radiocommunication par paquets de passerelle, comprenant
une interface configurée pour communiquer avec au moins un autre appareil,
une mémoire configurée pour stocker un code de programme informatique, et
un processeur configuré pour amener l'appareil à effectuer :
l'acquisition d'une indication de degré de confiance d'un réseau d'accès par rapport à un réseau cœur conjointement avec un type de technologie d'accès du réseau d'accès en recevant un message de signalisation en provenance du réseau d'accès, ledit message de signalisation étant un message selon un protocole de tunnellisation de service général de radiocommunication par paquets,
la détection d'une propriété de confiance ou de non-confiance du réseau d'accès du type de technologie d'accès sur la base de l'indication de degré de confiance et du type de technologie d'accès acquis, et
le fonctionnement selon la propriété de confiance ou de non-confiance détectée du réseau d'accès, dans lequel le processeur est configuré pour amener à effectuer l'acquisition de sorte que
l'indication de degré de confiance et le type de technologie d'accès sont acquis à partir d'un paramètre de type de technologie d'accès, une valeur du paramètre de type de technologie d'accès indiquant une propriété de confiance du réseau d'accès du type de technologie d'accès et une autre valeur du paramètre de type de technologie d'accès indiquant une propriété de non-confiance du réseau d'accès du type de technologie d'accès, ou
le type de technologie d'accès est acquis à partir d'un paramètre de type de technologie d'accès et l'indication de degré de confiance est acquise à partir d'un paramètre de degré de confiance indiquant une propriété de confiance ou de non-confiance du réseau d'accès du type de technologie d'accès indiqué dans le paramètre de type de technologie d'accès,
dans lequel le paramètre de type de technologie d'accès comprend un élément de type de technologie d'accès radio dans le cas où ledit message de signalisation est un message selon un protocole de tunnellisation de service général de radiocommunication par paquets, et le paramètre de degré de confiance comprend un élément lié au degré de confiance dans le cas où ledit message de signalisation est un message selon un protocole de tunnellisation de service général de radiocommunication par paquets.

8. Appareil selon l'une quelconque des revendications 6 et 7, dans lequel le processeur est configuré pour amener l'appareil à effectuer, lors du fonctionnement, au moins l'un parmi
l'indication de la propriété de confiance ou de non-confiance du réseau d'accès à un élément de réseau pour au moins l'un parmi un contrôle de politique et de taxation, une authentification, autorisation et comptabilité, un contrôle de taxation en ligne, un contrôle de taxation hors ligne, et une interception licite,
la fourniture d'informations à un élément de réseau dans le réseau d'accès et/ou le réseau cœur,
le contrôle de la transmission de messages d'annonce de routeur à un élément de réseau dans le réseau d'accès et/ou le réseau cœur, et
la détermination d'informations liées à l'interception pour une interception licite et/ou la fourniture d'informations liées à l'interception à un élément de réseau pour une interception licite.

9. Appareil selon l'une quelconque des revendications 6 à 8, dans lequel
le réseau cœur et le réseau d'accès sont compris dans un système de paquets évolué, et/ou
le réseau cœur comprend un réseau cœur 3GPP et le réseau d'accès comprend un réseau d'accès non-3GPP, et/ou
le réseau cœur comprend un cœur de paquets évolué et le réseau d'accès comprend un accès WiFi.

10. Appareil selon l'une quelconque des revendications 6 à 9, dans lequel
l'appareil est exploitable comme ou au niveau d'un élément de réseau dans le réseau cœur, et/ou
le réseau d'accès fournit une connectivité de protocole Internet d'un terminal au réseau cœur via un élément de réseau dans le réseau d'accès, et/ou
le processeur est configuré pour amener l'appareil à effectuer l'acquisition en acquérant une signalisation via au moins une passerelle d'accès.

11. Produit de programme informatique comprenant un code de programme informatique exécutable par ordinateur qui, lorsque le programme est exécuté sur un ordinateur, est configuré pour amener l'ordinateur à réaliser le procédé selon l'une quelconque des revendications 1 à 5.

12. Produit de programme informatique selon la revendication 11, dans lequel le produit de programme informatique comprend un support lisible par ordinateur sur lequel est stocké le code de programme informatique exécutable par ordinateur, et/ou dans lequel le programme est chargeable directement dans une mémoire interne du processeur.
